# EUROPÄISCHE PATENTANMELDUNG

(11) **EP 2 036 775 A2**
(43) Veröffentlichungstag der Anmeldung: **18.03.2009**
(21) Anmeldenummer: 08105233.4
(22) Anmeldetag: 04.09.2008
(51) Int. Cl.: B60R 13/02, B61D 17/18

(54) **Rastsystem zur Befestigung und Montage von Seitenwandbekleidungen**

(30) Priorität: 15.09.2007 DE 202007012962 U
(71) Anmelder: LAKOWA, 02681 Wilthen (DE)
(72) Erfinder: Saring, Matthias, 02681 Schirgiswalde (DE); Happel, Andreas, 02681 Wilthen (DE)
(74) Vertreter: Sperling, Thomas

(57) **Zusammenfassung**

Rastsystem zur Befestigung und Montage von Seitenwandbekleidungen in Innenbekleidungen von Schienen- und Nutzfahrzeugen, wobei im montierten Zustand benachbarte Seitenwandbekleidungsbauteile an ihren Bauteilfügungen jeweils ein Rastsystem enthalten. Ein Seitenwandbekleidungsbauteil (1) verfügt beidseitig über als Rastnasen (4.1) ausgebildete Vorsprünge, während die zu beiden Seiten benachbarten Seitenwandbekleidungsbauteile (9) für die Rastverbindung mit den Rastnasen (4.1) über maßlich exakt auf die Rastnasen abgestimmte Einrasttaschen (9) verfügen. Eine von beiden Arten von Seitenwandbekleidungsbauteilen (1,8) weist Befestigungselemente (6) zur Befestigung des Seitenwandbekleidungsbauteils (1) an einem Rohbau auf und ist somit als Festteil vorgesehen. Die jeweils andere Art von Seitenwandbekleidungsbauteilen (8,1) weist keine Befestigungselemente (6) auf und ist als Steckteil vorgesehen.

## Beschreibung

Die Erfindung betrifft ein Rastsystem zur Befestigung und Montage von Seitenwandbekleidungen in Innenbekleidungen von Schienen- und Nutzfahrzeugen.

Bei Innenbekleidungen von Schienen- und Nutzfahrzeugen werden Seitenwandbekleidungen gemäß dem Stand der Technik entweder stumpf aneinander verklebt oder verschraubt.

Nachteilig bei solchen Verklebungen oder verschraubten Seitenwandbekleidungen ist, dass kein Formschluss der Seitenwandbekleidungsbauteile zueinander besteht. Das erfordert eine aufwendige Positionierung der Seitenwandbekleidungsbauteile zur Befestigung. Hinzu kommt, dass durch aufwendige Nacharbeit Passgenauigkeit an den Seitenwandbekleidungsbauteilen hergestellt werden muss.

Die Aufgabe der Erfindung besteht in der Verkürzung der Montagezeit der oben genannten Seitenwandbekleidungsbauteile und in der Sicherstellung der Passgenauigkeit ohne Nacharbeit.

Die Lösung der Aufgabe der Erfindung besteht in einem Rastsystem zur Befestigung und Montage von Seitenwandbekleidungen in Innenbekleidungen von Schienen- und Nutzfahrzeugen, wobei drei im montierten Zustand benachbarte Seitenwandbekleidungen an ihren Seitenwandbekleidungsbauteilfügungen jeweils ein Rastsystem enthalten. Ein Seitenwandbekleidungsbauteil verfügt beidseitig über als Rastnasen vorgesehene Vorsprünge, während die beiden jeweils benachbarten Seitenwandbekleidungsbauteile über Einrasttaschen verfügen. Dieses System der Einrasttaschen und Rastnasen ist maßlich exakt aufeinander abgestimmt. Eine der genannten beiden Arten von Seitenwandbekleidungsbauteilen weist Befestigungselemente zur Befestigung des Seitenwandbekleidungsbauteils an einem Rohbau auf, wobei dieses Seitenwandbekleidungsbauteil dann als Festteil vorgesehen ist. Die jeweils andere Art von Seitenwandbekleidungsbauteilen verfügt über keine Befestigungselemente für die Befestigung am Rohbau und erfüllt die Funktion eines Steckteils.

Durch das erfindungsgemäße Rastsystem wird eine verbesserte Passgenauigkeit und ein Formschluss der Seitenwandbekleidungsbauteile erreicht. Des Weiteren werden Zurichtarbeiten und Montagezeiten erheblich reduziert.

In einer Ausführung der Erfindung werden bei der Montage die Seitenwandbekleidungsbauteile mit den Einrasttaschen (Festteil) zuerst am Wagenkasten befestigt. Danach wird die Seitenwandbekleidung mit den Rastnasen (Steckteil) in die Seitenwandbekleidungsbauteile mit den Einrasttaschen eingerastet. Dadurch ergibt sich ein Formschluss zu den benachbarten Seitenwandbekleidungsbauteilen.

Alternativ dazu sind die Seitenwandbekleidungsbauteile mit den Rastnasen als Festteil vorgesehen. Dazu weisen sie beidseitig mehrere zweiteilige Vorsprünge auf, die jeweils zu einem Teil aus den Rastnasen und zum anderen Teil aus Vorsprüngen einer Befestigungsleiste gebildet werden, wobei die Vorsprünge mit Befestigungselementen zur Befestigung des Seitenwandbekleidungsbauteils an einem Rohbau versehen sind. In dieser Ausführung sind die Seitenwandbekleidungsteile mit den Einrasttaschen als Steckteile vorgesehen.

Die Rastnasen sind vorzugsweise als im Wesentlichen rechteckige aus dem Seitenrand des Seitenwandbekleidungsbauteils herausragende Vorsprünge ausgebildet.

In einer bevorzugten Ausgestaltung des erfindungsgemäßen Rastsystems sind die Einrasttaschen auf der Innenseite des Seitenwandbekleidungsbauteils positioniert und gegenüber dem Seitenrand des Seitenwandbekleidungsbauteils nach innen eingerückt.

Vorzugsweise ist ein Seitenwandbekleidungsbauteil mit Einrasttaschen zweischalig aufgebaut. Dabei besteht dieses Seitenwandbekleidungsbauteil aus der einer vorderen Schale und einer hinteren Schale. Die Einrasttaschen werden einerseits durch obere Einrasttaschenschalen gebildet, die als Vorsprünge aus den seitlichen Rändern der inneren Schale ausgebildet sind. Andererseits wird eine untere Einrasttaschenschale dadurch gebildet, dass ein Teil der Grundplattenfläche, die Bestandteil der vorderen Schale ist, von der oberen Einrasttaschenschale überdeckt wird und sich zwischen der oberen Einrasttaschenschale und der unteren Einrasttaschenschale ein Aufnahmespalt für die Rastnasen befindet.

Weitere Einzelheiten, Merkmale und Vorteile der Erfindung ergeben sich aus der nachfolgenden Beschreibung von zwei Ausführungsbeispielen mit Bezugnahme auf die zugehörige Zeichnungen. Es zeigen:
- **Fig. 1 :**: ein Seitenwandbekleidungsbauteil mit Rastnasen,
- **Fig. 2:**: Seitenwandbekleidungsbauteil mit Einrasttaschen,
- **Fig. 3a:**: einen Ausschnitt des Seitenwandbekleidungsbauteils, der eine Einrasttasche in ihrer Draufsicht zeigt,
- **Fig.3b:**: einen Ausschnitt des Seitenwandbekleidungsbauteils, der eine Einrasttasche in ihrer Seitenansicht zeigt,
- **Fig. 4:**: einen Ausschnitt der Seitenwandbekleidungsbauteil mit einer Einrasttasche, in die eine Rastnase einer benachbarten Seitenwandbekleidung eingerastet ist.

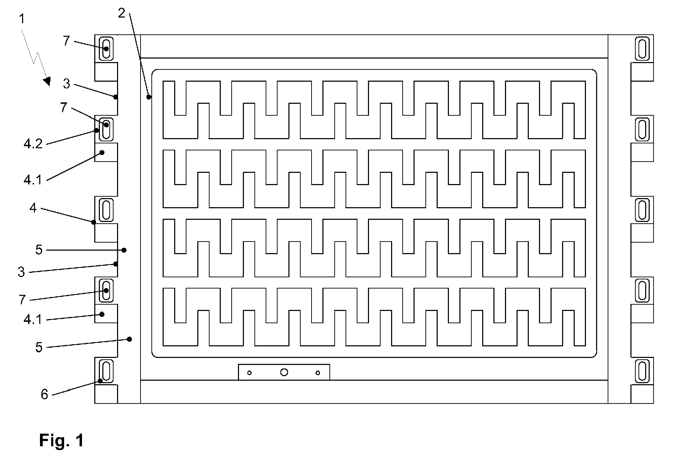

In **Fig. 1** ist ein Seitenwandbekleidungsbauteil 1 dargestellt, das zweischalig aus einer inneren Schale 2 und einer äußeren Schale (nicht dargestellt) aufgebaut ist. An seinen Seitenrändern 3 sind, aus der Draufsicht gemäß **Fig. 1** betrachtet, jeweils fünf im Wesentlichen rechteckige zweiteilige Vorsprünge 4 ausgebildet. Ein Teil der zweiteiligen Vorsprünge wird jeweils durch eine Rastnasen 4.1 gebildet. Die im Wesentlichen rechteckigen Ebenen der Rastnasen 4.1 liegen tiefer als die Ebene der inneren Schale 2. Auf der inneren Schale 2 sind des Weiteren Befestigungsleisten 5 angebracht, die entlang des Seitenrandes 3 verlaufen und diesen verstärken. Dabei weisen die Befestigungsleisten 5 ihrerseits im Wesentlichen rechteckige Vorsprünge 4.2 auf, wobei auf diesen Vorsprüngen Befestigungselemente 6 mit ovalen Ausnehmungen 7 ausgebildet sind, die der Anbringung des Seitenwandbekleidungsbauteils 1 an einem Rohbau dienen. Der rechteckige Vorsprung 4.2 der Befestigungsleiste grenzt jeweils direkt an eine Rastnase 4.1, wobei die Ebene des rechteckigen Vorsprungs 4.2 der Befestigungsleiste 5 höher liegt, als die Ebene der Rastnase 4.1. Somit bilden die rechteckigen Vorsprünge 4.2 der Befestigungsleiste 5 den jeweiligen zweiten Teil der zweiteiligen im Wesentlichen rechteckigen Vorsprünge 4 des Seitenwandbekleidungsbauteils 1.

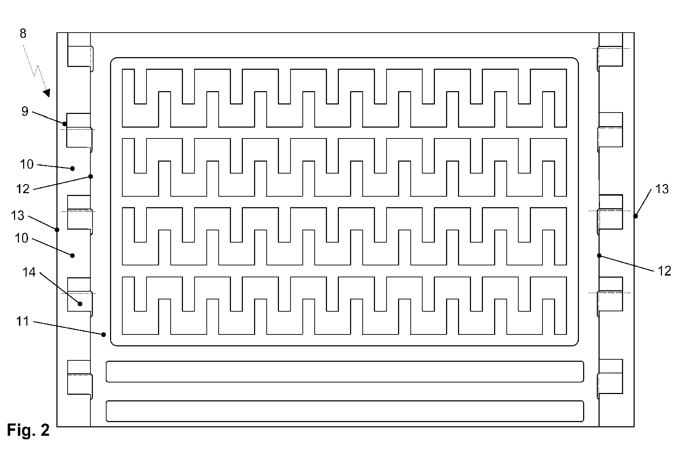

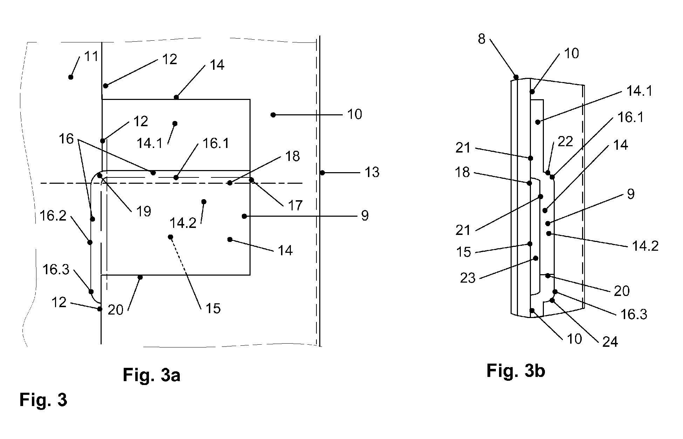

**Fig. 2** zeigt ein ebenfalls zweischalig ausgebildetes Seitenwandbekleidungsbauteil 8 mit Einrasttaschen 9 für die Aufnahme der Rastnasen 4.1. Eine Einrasttasche 9 wird gemäß **Fig. 2** einerseits durch eine Grundplattenfläche 10, die Teil der vorderen Schale ist, gebildet. Auf der Grundplattenfläche 10 anliegend befindet sich die innere Schale 11, die kleiner dimensioniert ist als die Grundplatte 10 und die vordere Schale. Die kleinere innere Schale 11 ist derart positioniert, dass ihre seitlichen Ränder 12 gegenüber den seitlichen Rändern 13 der Grundplatte 10 eingerückt sind. An den seitlichen Rändern 12 der inneren Schale 11 sind die oberen Einrasttaschenschalen 14 als in der Draufsicht gemäß **Fig. 2** und **3a** rechteckig erscheinende Vorsprünge aus dem seitlichen Rand 12 der inneren Schale 11 ausgebildet. Die **Fig. 3a** zeigt einen Ausschnitt des Seitenwandbekleidungsbauteils 8, der eine Einrasttasche 9 in ihrer Draufsicht zeigt. Die untere Einrasttaschenschale 15 wird durch den durch die obere Einrasttaschenschale 14 überdeckten Teil der Grundplattenfläche 10 gebildet. Die obere Einrasttaschenschale 15 weist einen Bogenbereich 16 auf. Dieser Bogenbereich 16 erstreckt sich zunächst in einem ersten Bogenbereichsabschnitt 16.1 linear vom und senkrecht zum äußeren Spaltrand 17 der oberen Einrasttaschenschale 14 ungefähr entlang der Mitte 18 der oberen Einrasttaschenschale 14 bis zum seitlichen Rand 12 der inneren Schale 11. Beim seitlichen Rand 12 der inneren Schale 11 nimmt der Bogenbereich 16 den Verlauf einer horizontalen Kurve 19, wobei der Bogenbereich 16 nach Durchlaufen dieser horizontalen Kurve 19 nahe am und parallel zum seitlichen Rand 12 und somit senkrecht zum ersten Bogenbereichsabschnitt 16.1 als Bogenbereichsabschnitt 16.2 ausgerichtet ist. Der Bogenbereichsabschnitt 16.2 verläuft bis an den senkrecht zum Bogenbereichsabschnitt 16.2 ausgerichteten Spaltrand 20 der Einrasttasche 9 linear und geht in den Bogenbereichsabschnitt 16.3 über, der ausgehend von der Position des Bogenbereichsabschnitts 16.2, die sich auf der inneren Schale 11 nahe des seitlichen Randes 12 befindet, in die Richtung des seitlichen Randes 12 gebogen ist. Der Bogenbereichsabschnitt 16.3 und somit der gesamte Bogenbereich 16 schließen dann am seitlichen Rand 12 ab.

Die **Fig. 3b** zeigt einen Ausschnitt des Seitenwandbekleidungsbauteils 8, der eine Einrasttasche 9 in ihrer Seitenansicht zeigt. Die obere Einrasttaschenschale 14 ist gemäß **Fig. 3b** im seitlichen Querschnitt der Einrasttasche 9 stufenförmig ausgebildet. Im Abschnitt 14.1 der oberen Einrasttaschenschale 14 bis kurz vor Position der der Mitte 18 der Einrasttasche 9 liegt die obere Einrasttaschenschale 14 mit der unteren Fläche 21 noch an die Grundplattenfläche 10 an. Kurz vor der Mitte 18, auf der Position des Bogenbereichsabschnitts 16.1, beschreibt die obere Einrasttaschenschale 14 zunächst einen vertikalen Bogen 22, wodurch sich die untere Fläche 21 oberen Einrasttaschenschale 14 von der unteren Einrasttaschenschale 15 und somit von der Grundplattenfläche 10 abhebt. Die konkave Seite des vertikalen Bogens 22 ist zur Grundplattenfläche 10 ausgerichtet, wobei nach dem Ende des Bogens 22 die obere Einrasttaschenschale 14 mit ihrer unteren Fläche 21 nicht mehr auf der Grundplattenfläche 10 und der unteren Einrasttaschenfläche 15 anliegt, sondern parallel beabstandet zu der unteren Einrasttaschenfläche 15 verläuft. Hier beginnt ein neuer Abschnitt 14.2 der oberen Einrasttaschenschale 14. Zwischen den parallel beabstandeten Flächen 15 und 21 ist somit ein Aufnahmespalt 23 ausgebildet, der senkrecht zum seitlichen Rand 12 der inneren Schale 11 durch den Spaltrand 20 begrenzt wird. Der Bogenbereich 16.3 der Einrasttasche 9, der über den Spaltrand 20 hinaus auf der inneren Schale 11 verläuft, beschreibt einen vertikalen Bogen 24 in Richtung Grundplattenfläche 10 bis zum Anliegen auf der Grundplattenfläche 10.

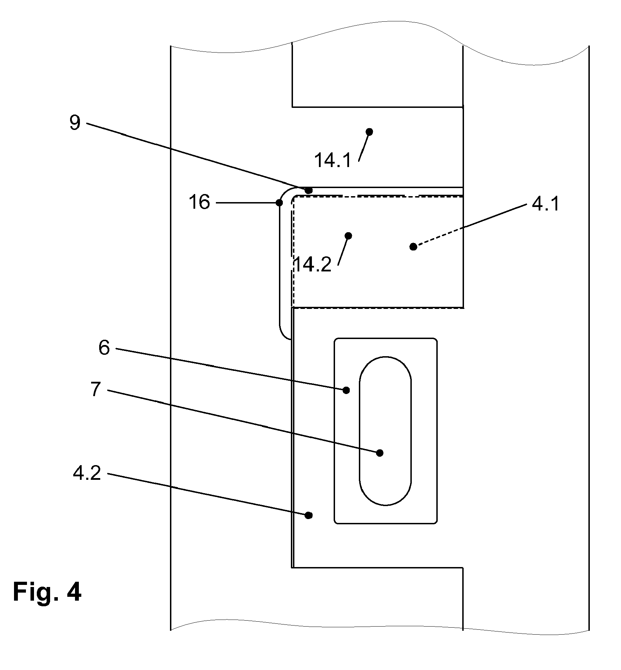

In der Zusammenschau der **Figuren 3a** und **3b** ist zu erkennen, dass durch die Einrasttasche 9 ein Aufnahmespalt 23 gebildet wird, der am unteren Spaltrand 20 und am äußeren Spaltrand 17 geöffnet und an den Bogenbereichsabschnitten 16.1 und 16.2 geschlossen ist. Der Aufnahmespalt 23 der Einrasttasche 9 bildet die Aufnahme für die passgenaue Verbindung mit einer Rastnase 7 gemäß **Fig. 1****.** Eine solche Verbindung einer Einrasttasche 9 mit einer Rastnase 7 zeigt **Fig. 4** in Form eines Ausschnittes des Seitenwandbekleidungsbauteils 8 mit einer Einrasttasche 9, in die eine Rastnase 4.1 eines benachbarten Seitenwandbekleidungbauteils 1 eingerastet ist. In den Ausführungen gemäß der **Figuren 1** bis **4** ist das Seitenwandbekleidungsbauteil 1, als Festteil vorgesehen, welches an einem Rohbau mit Hilfe von Befestigungselementen 6 angebracht wird, während das Seitenwandbekleidungsbauteil 8 mit den Einrasttaschen 9 als Steckteil ausgebildet ist.

### LISTE DER BEZUGSZEICHEN

- 1: Seitenwandbekleidungsbauteil
- 2: innere Schale
- 3: Seitenränder
- 4: zweiteiliger Vorsprung
- 4.1: Rastnase
- 4.2: Vorsprung der Befestigungsleiste
- 5: Befestigungsleiste
- 6: Befestigungselemente
- 7: ovale Ausnehmungen
- 8: Seitenwandbekleidungsbauteil
- 9: Einrasttasche
- 10: Grundplatte, Grundplattenfläche
- 11: innere Schale
- 12: seitlicher Rand
- 13: seitliche Ränder
- 14: obere Einrasttaschenschale
- 14.1: Abschnitt der oberen Einrasttaschenschale
- 14.2: Abschnitt der oberen Einrasttaschenschale
- 15: untere Einrasttaschenschale
- 16: Bogenbereich
- 16.1: Bogenbereichsabschnitt
- 16.2: Bogenbereichsabschnitt
- 16.3: Bogenbereichsabschnitt
- 17: äußerer Spaltrand
- 18: Mitte
- 19: horizontale Kurve
- 20: Spaltrand
- 21: untere Fläche
- 22: vertikaler Bogen
- 23: Aufnahmespalt
- 24: vertikaler Bogen

## Patentansprüche

1. Rastsystem zur Befestigung und Montage von Seitenwandbekleidungen in Innenbekleidungen von Schienen- und Nutzfahrzeugen, wobei im montierten Zustand benachbarte Seitenwandbekleidungsbauteile an ihren Bauteilfügungen jeweils ein Rastsystem enthalten, **dadurch gekennzeichnet, dass** ein Seitenwandbekleidungsbauteil (1) beidseitig über als Rastnasen (4.1) ausgebildete Vorsprünge verfügt, während die zu beiden Seiten benachbarten Seitenwandbekleidungsbauteile (9) für die Rastverbindung mit den Rastnasen (4.1) über maßlich exakt auf die Rastnasen abgestimmte Einrasttaschen (9) verfügen und dass eine von beiden Arten von Seitenwandbekleidungsbauteilen (1,8) Befestigungselemente (6) zur Befestigung des Seitenwandbekleidungsbauteils (1) an einem Rohbau aufweist und somit als Festteil vorgesehen ist und die jeweils andere Art von Seitenwandbekleidungsbauteilen (8,1) keine Befestigungselemente (6) aufweist und als Steckteil vorgesehen ist.

2. Rastsystem nach Anspruch 1, **dadurch gekennzeichnet, dass** die Seitenwandbekleidungsbauteile (1) mit den Rastnasen (4.1) als Festteil vorgesehen sind und beidseitig mehrere zweiteilige Vorsprünge (4) aufweisen, die jeweils zu einem Teil aus den Rastnasen (4.1) und zum anderen Teil aus mit Befestigungselementen (6) versehenen Vorsprüngen (4.2) einer Befestigungsleiste (5) gebildet werden und dass die Seitenwandbekleidungsteile (8) mit den Einrasttaschen (9) als Steckteile vorgesehen sind.

3. Rastsystem nach Anspruch 1 oder 2, **dadurch gekennzeichnet, dass** die Rastnasen (4.1) als rechteckige Vorsprünge ausgebildet sind.

4. Rastsystem nach einem der Ansprüche 1 bis 3, **dadurch gekennzeichnet, dass** die Einrasttaschen (9) auf der Innenseite des Seitenwandbekleidungsbauteils (8) positioniert sind und gegenüber dem Seitenrand (13) des Seitenwandbekleidungsbauteils (8) nach innen eingerückt sind.

5. Rastsystem nach einem der Ansprüche 1 bis 3, **dadurch gekennzeichnet, dass** ein Seitenwandbekleidungsbauteil (8) mit Einrasttaschen (9) zweischalig aufgebaut ist, wobei es aus der einer vorderen Schale und einer hinteren Schale besteht, und dass die Einrasttaschen (9) einerseits durch oberen Einrasttaschenschalen (14) in Form von Vorsprüngen aus den seitlichen Rändern (12) der inneren Schale (11) und andererseits durch eine untere Einrasttaschenschale (15), die als der von der oberen Einrasttaschenschale (14) überdeckte Teil der Grundplattenfläche (10) Bestandteil der vorderen Schale ist, gebildet werden, wobei sich zwischen der oberen Einrasttaschenschale (14) und der unteren Einrasttaschenschale (15) ein Aufnahmespalt (23) für die Aufnahme der Rastnasen (4.1) befindet.
